## Europäisches Patentamt

## European Patent Office

## Office européen des brevets

(19)

(11) Publication number: **0 250 670**
**B1**

# EUROPEAN PATENT SPECIFICATION

(45) Date of publication of the patent specification:
**28.11.90**

(51) Int. Cl.⁵: **F16N 15/00, A46B 1/00**

(21) Application number: **86305169.4**

(22) Date of filing: **03.07.86**

(54) **A flexible lubricant applicator.**

(43) Date of publication of application:
**07.01.88 Bulletin 88/1**

(45) Publication of the grant of the patent:
**28.11.90 Bulletin 90/48**

(84) Designated Contracting States:
**AT BE CH DE FR GB IT LI LU NL SE**

(56) References cited:
**FR-A- 1 595 272**
**US-A- 2 656 558**
**US-A- 3 384 915**
**US-A- 4 010 308**

**"Lubrication: A Practical Guide to Lubricant Selection", A.R.Lansdown, 1982, Pergamon Press, p.136-137**

(73) Proprietor: **Rands, Mary, 3315 Villa Knolls, Pasadena California 91107(US)**

(72) Inventor: **Rands, Mary, 3315 Villa Knolls, Pasadena California 91107(US)**

(74) Representative: **Frost, Dennis Thomas et al, WITHERS & ROGERS 4 Dyer's Buildings Holborn, London, EC1N 2JT(GB)**

## Description

This invention relates to a flexible lubricant applicator. Known lubricating means comprise liquid or semi-liquid lubricating materials, for example oils or greases, and apparatus for effectively applying them, either initially or during operation, to workpiece surfaces to be lubricated. Sometimes, prior art apparatus has mechanism for moving oil or grease to a workpiece surface and effectively applying it under the action of gravity, positive feeding pressure or other applicatory procedure. There have also been a few prior art so-called "self-lubricating" or so-called "oil-less" constructions which provided lubrication by causing the workpiece surface (for example the surface of a bearing) to be essentially porous and with the many pores thereof being initially filled with lubricant material, for example oil or grease. This type of construction is in effect already provided with its own lubricant.

However, the various prior art lubricating systems apparatus and procedures referred to above, have disadvantages, thus when a workpiece surface is initially placed into relative sliding contact with some other workpiece surface (such as a piston or piston rings within a cylinder of an engine, for example), at the very beginning of the relative movement, there is usually a minimum of lubrication present on the frictionally-engaged and slidably movable workpiece surfaces and this condition continues for as long as is required to bring above positive feeding of liquid or semi-liquid lubricant material onto the engaged slidably moving workpiece surfaces, which occurs only after whatever mechanism is employed for moving the lubricating oil or grease onto the slidably engaged workpiece surfaces has had time to become effective. In cases where the workpiece surfaces and the lubricating oil or grease are initially cold, this problem may .be further aggravated, because real lubrication of the workpiece surfaces will then normally not occur until the oil or grease has been heated sufficiently to reduce its viscosity to a proper value for good feeding action thereof to the sliding workpiece surfaces. The so-called "self-lubricating" lubrication is generally only effective for relatively low load or light duty apparatus and is limited further by the requisite porous structure required of the workpiece surfaces, which is precluded under certain conditions and where certain types of workpiece surfaces are used. Further, another prior art disadvantage is that if one attempts to provide initial lubrication to workpiece surfaces before beginning to move them in sliding contact, the oil applied to the workpiece surfaces will tend to drain away, and when relative movement of the surfaces begins after a time delay, it will be found that little initial lubrication exists. Thus it is clear that any improvement in the lubricating art which would make it possible to apply lubricant material to a workpiece surface in a relatively simple manner and in which the lubrication would remain effective for a substantial time thereafter and would not become ineffective for quite a long time, would be a desirable improvement, because it would largely overcome the prior art disadvantages.

Probably one of the main uses of the lubricant-applicator of the present invention is in the field of pneumatics, where it is desirable to keep the operating air as moisture-free and as oil-free as possible. Many small air compressors operate without oiled cylinders and rely on oil mist which may, or may not, be carried to the cylinder wall by oil grooves cut into the face of the piston. Graphite for example, embedded into the valleys of the cylinder-wall surface would supply lubricant (as graphite is a lubricant) as well as providing a base for oil retention. Graphite or Teflon would also transfer to any "O" ring and would reduce friction and increase operating efficiency and life. Initial "bedding down" wear would have the possibility of scuffing or premature glazing reduced by having a graphite base to begin with.

According to the present invention, a flexible lubricant applicator for forcibly applying a required quantity of a lubricant material to a workpiece surface which is harder than the lubricant material comprises a base member having means for coupling it to driving means for moving said base member relative to a workpiece surface to be lubricated, lubricating means comprising a plurality of outwardly extending flexible lubricant mounting members secured at their inner ends to said base member and each provided at its outer end with a pre-formed lubricant body for abradable engagement with the surface of a workpiece to be lubricated, said lubricant bodies being physically softer than the workpiece whereby forced abrasion of said lubricant bodies by irregularities in the workpiece surface serves to transfer lubricant material from said bodies to said surface.

On page 136 and 137 of the book entitled "Lubrication – A Practical Guide to Lubricant Selection" by A.R. Lansdown, published in 1982 by Pergamon Press, it is disclosed that a mixture of a solid lubricant such as molybdenum disulphide and resin when dispersed in a solvent, can be applied by brushing and that dispersions of molybdenum disulphide in lubricating oils and greases are widely used. The applicator according to the present invention, however, does not apply lubricant in liquid form but in solid form which is removed from the tips of the bristles by abrasion. FR A 1 595 272 discloses a method af applying any lubricant to a surface by bombarding the surface with a lubricant-coated ball which makes small indentations which are filled with lubricant removed from the ball on impact.

US-A 3 384 915, by contrast, discloses an abrasive brush having the tips of its bristles enlarged and coated with an adhesive material which serves to retain a plurality of abrasive particles.

In use of the invention, a quantity of the lubricant is abraded away and is smeared across and into minute surface recesses in the microfinish of the workpiece surface, to cause an appreciable amount of dry lubricant to adhere to any treated area of the workpiece surface, for causing it to be immediatly lubricated when placed into frictional relative movement with respect to another surface. The movement-transmissible force-applying coupling means may comprise a portion of the base member, or an extension of a portion thereof, and arranged to be either coupled to a driving tool for example a powered drill or to other driving means, such as even the hand of an operator. Thus the applicator functions so as to allow a driving force to be applied to the base member, to each lubricant mounting means mounted onthe base member and to each lubricant means on the mounting means, so that a desired type of forcible, resilient, compliant, smearing-on movement of one or more such lubricant means along a harder and surface-irregular workpiece can occur. This movement may be for instance of translatory nature, a reciprocating nature or a rotary nature such that it provides for an engagement with a workpiece surface of one or more such lubricant means which may be termed "floating action" engagement and also which may be termed "independent suspension action" engagement where each lubricant means is independently suspended and applied under its own forcible compliant "floating action" engagement with the workpiece surface, so as to prevent any major surface irregularities from causing abrupt discontinuities in the engagement of the lubricant means therewith and also such as to prevent breakage of the applicator. Each lubricant means is physically softer than the surface of the workpiece to be mechanically lubricated thereby through forced abrasion of the softer lubricating means by surface irregularities (even of a microfinish profile type) present in such a workpiece surface.

In one firm, the lubricant means is a lubricant body or globule made up of multiple layers of plastic resin matrix material. Each layer may be initially applied in liquid or semi-liquid form to each such nylon bristle tip and either initially has multiple graphite particles or is dipped into multiple graphite particles, so as to become filed with them either or both within the liquid plastic layer and on the outer surface thereof, after which, the plastic matrix is cured so as to harden, with the particles being firmly held in place. This layering process may be used as many times as desired to build up a lubricant body (or globule) of any desired size. The initial adherence of the inner or first lamination of such plastic matrix material to the bristle tip end may be facilitated by using an initial junction-enhancing step and/or junction-bonding or bridging material which in some cases may include dipping the bristle tip end in a scarifying liquid to roughen its surface, and using intervening bridging material having an affinity for both the nylon and the matrix material which may be applied to the bristle tip end to act as a strongly adhering junction or bridge. In one form the bridging material may comprise resorcinol-formaldehyde resin adhesive material which, in one version, may be of a two-component type capable of having one component thereof applied in liquid form, usually at room temperature, to the exterior of the bristle tip ends and then to have the second component thereof, comprising an additive, applied for curing and hardening in place, followed by the application of the first or inner layer of the plastic bonding material of the first matrix lamination(which is preferably an epoxy resin) and carrying the lubricant material (such as graphite particles) over the surface thereof and/or disseminated throughout it. The applicator of the invention is particularly suitable for operation in a self-centering manner with respect to curved or cylindrical workpiece surfaces, especially workpiece surfaces which are inside surfaces.

The invention will now be described by way of example, with reference to the dawings in which:-

Fig. 1 is an isometric view illustrating one embodiment of the invention and which comprises a flexible lubricant applicator brush having a plurality of lubricating globules;

Fig. 1A is an end elvation of Fig. 1;

Fig. 2 is a greatly enlarged cross-section of one of the globules seen in Fig. 1, as indicated by the line 2-2 in Fig. 1;

Fig. 3 is an enlarged fragmentary view illustrating an initial step in making the globule shown in Fig. 2; in this view, only a bristle tip end is shown prior to the first stage of mounting a lubricating globule thereon;

Fig. 4 is generally similar to Fig. 3 but shows the bristle tip end after completion of a first lubricating globule-forming operation;

Fig. 5 is a view similar to Fig. 4 but illustrates the next step in the formation of the lubricating globule;

Fig. 6 is similar to Fig. 5 but shows multiple particles of dry lubricant material disseminated throughout the layer of a three-part epoxy material and also carried on the surface thereof;

Fig. 7 is a view illustrating the next step in the formation of a lubricant globule comprising the curing-in-place of the various successive layers of epoxy resinoid matrix material (and absorbed particles of dry lubricant material) in addition to the inner initial bridging or junction layer, provided by the application of curing heat;

Fig. 8 is a view similar to Fig. 5 but illustrates the application of additional laminations over the first laminated structure shown being cured in place in Fig. 6.

Fig. 9 illustrates the application of the applicator of Fig. 1 to a curved workpiece surface and is an example of the application thereof to a workpiece surface of a desired configuration, provided that it is harder than the lubricant globules and the dry lubricant particles;

Fig. 10 is a much enlarged fragmentary microprofile cross-section of a portion of a workpiece surface when it is of an idealised "plateaued type" , in which microprojections have had their peaks or tip ends abraded away to provide them with flat tops spaced by crevices and valleys therebetween and shows the filling in of the crevices and valleys with smeared-on dry lubricant material by use of the lubricant applicator of the invention;

Fig. 11 is similar to Fig. 10 but shows a micro-profile workpiece surface section which is of "peaky" type (not plateaued in the manner of Fig. 10) and shows that it also has intervening crevices and valleys filled with smeared-on softer dry lubricant material;

Fig. 12 is a view similar to Fig. 1 but showing another embodiment; and

Fig.s 13 and 14 are graphs which show microscopic anlaysis of sample workpiece surfaces.

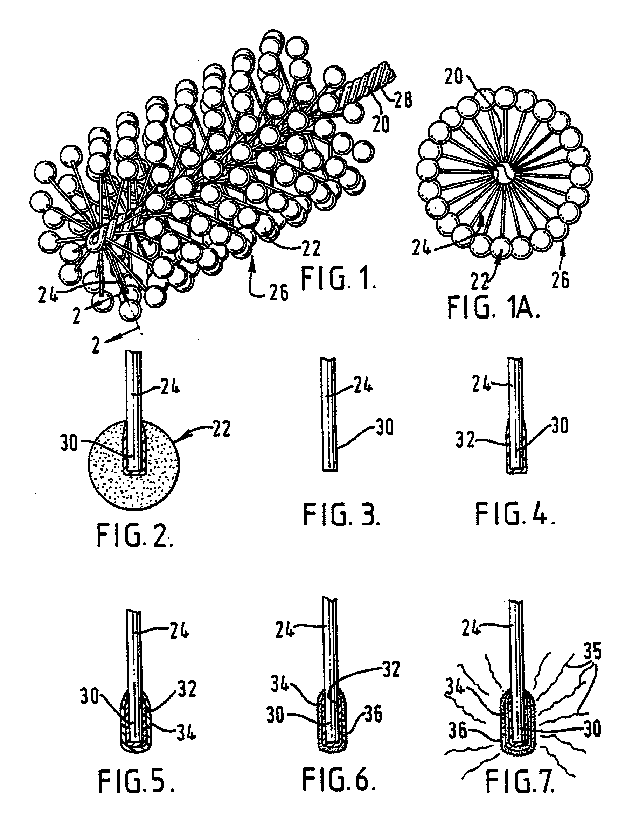

Referring to the drawings, a flexible lubricant applicator comprises a base member 20 which has outwardly extending lubricant means 22 and which further has flexible, compliant lubricant mounting means 24 flexibly and compliantly mounting each corresponding lubricant means 22 relative to the base member 20. Each lubricant means 22 takes the form of a lubricating globule, shown in detail in Fig. 2.

In the present embodiment, each compliant lubricant mounting means 22 comprises a flexible bristle shaft 24 of nylon, although other flexible, compliant materials may be used. Also the arrangement of the plurality of bristle shafts 24 and the plurality of globules 22 at their outer ends is such relative to the base member 20 as to form a flexible lubricating brush 26. The bristles 24 and the globules 22 are mounted in a circular array (which in certain forms, may along the outer periphery thereof, simulate a close knit helix or multiple such effectively interwoven so that one can follow a spiral encircling line from globule to globule around the outer periphery of the whole brush 26.) This partially follows from the construction of the brush, particularly the attachment of inner ends of the bristles 24 relative to the central longitudinal base member 20 which comprises passing longer or effectively double lengths of the bristle material between the wires 28 of the base member 20 and doing so prior to tightly twisting the wires 28 into the tightly twisted configuration shown in Fig. 1. This firmly engages middle parts of the double lengths of bristle material and in effect, causes the previously-mentioned helix simulating outer peripheral arrangement of the bristles and the globules 22. However, while this construction is convenient and effective, the invention is not thus limited and the flexible compliant lubricant mounting means (the bristles, in the present embodiment) can be positioned and structurally mounted in other ways, some generally similar, and some quite dissimilar, from the present embodiment.

The gobule 22 can be made in various ways. One representative procedure is illustrated sequencially in diagrammatic and simplified form in Figs. 2 to 8. Preferably each nylon bristle 24 has its bristle tip end 30 initially roughened and thus rendered more porous before the building up and curing-in-place of a required number of layers (each carrying dry lubricant material softer than a workpiece surface).

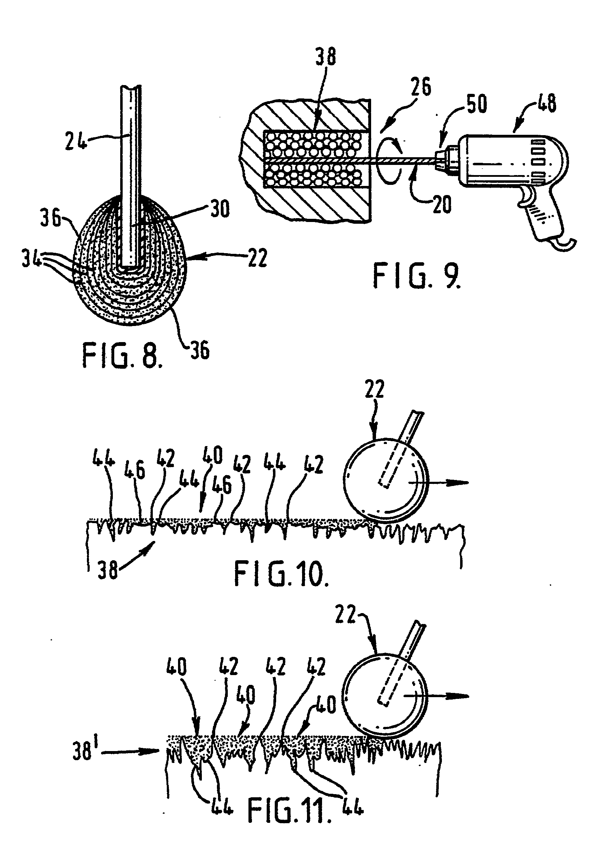

One high-density nylon which is effective for use in forming the bristles 24 is that known as 6-10, 6-12 or 6-06 nylon, which is relatively surface-impervious to water and many chemicals and which has an almost waxy outer surface with which it is difficult for most resinoid matrix materials to form a firm bond. This has been found to be true with the preferred resinoid matrix material which is an exposy resin. In these circumstances, when these two types of material are used, the roughening step has been found to be advantageous. One roughening or scarifying material is a resorcinol derivative which has ben found to attack the outer layer of the nylon bristle tip 30, seen in Fig. 3. After dipping or otherwise applying the resorcinol derivative to a desired length of the tip 30 of each bristle 24 so as to produce such bristle tip surface roughening (in some cases, with the effect reduced by dilution of the resorcinol derivative with water), the scarified tip 30 is then dried, for example, by the application of drying heat in a manner similar to that shown in Fig. 7, such as by using a curing box at a temperature of from 100° to 125° for from twenty to twenty five minutes. In some instances, the roughening may be repeated with a second coating of resorcinol material and with low temperature curing in the same fashion. The layer of resorcinol material forms an effective bridging or junction layer 32 (Fig. 4) and has an affinity for both the nylon of the bristle tip 30 and a resinoid plastic matrix material which will be applied thereto in the next step (Fig. 5) in which the plastic matrix material is designated by numeral 34.

The tip 30 of Fig. 4 is next coated with the material 34, which may be an epoxy resin. This can be of several different types, but one exemplary form is a three-part epoxy resin in which two parts are mixed prior to application to the tip 30 and in which the third part is a curing activator, with all three constituents being of appropriate composition and mixture such that each layer (including all subsequent layers) can each be cured in a low temperature curing box, or otherwise by the application of curing heat at approximately 185° during preferably a thirty-minute curing period.

The next step (or in certain cases, part of the same step), comprises the application, to the still-liquid resinoid matrix material 34, of a plurality of dry lubricant particles 36 (Fig. 6). These particles 36 may comprise for example graphite particles, a teflon type of polytetrafluoroethylene material or other dry lubricant which is softer than the workpiece surface to be lubricated. Application of the particles 36 may involve dipping, rolling or movement of various applicatory types of still-wet epoxy resin matrix material 34 into a quantity of particles 36 until the particles have entered into and/or adhered to the surface of the resin material 34 to a desired extent, or the mixing of the particles 36 with the liquid material 34 may be done before application of the composite material to the scarified bristle tip 30 of Fig. 4. In either case, the result is generally similar to what is shown in Fig. 6.

Next, the composite layer of still-liquid resin material 34 and dry lubricant particles 36 is cured in place in a low tempeature (preferably above ambient temperature) curing operation as described above by insertion into a curing box and subjected to curing heat 35 as indicated in Fig. 7 where it can be cured, until completion of the initial lamination curing operation has occurred. As mentioned, this may occur in one form of the invention after approximately thirty minutes of curing time at 185° in a curing box.

Fig. 8 illustrates the next step which merely comprises the application to the cured partially built-up globule 22 of Fig. 6, after curing as shown in Fig. 7 of another layer of the plastic epoxy resin matrix material 34, followed by the application thereto while still in liquid state of another quantity of the dry lubricant particles 36, all of which are then low-temperature cured by repeating the initial curing operation of Fig. 7.

Each of the final lubricating globules 22 of the dry lubricant brush 26 (Fig. 1) comprises a multiple layer globule similar to that described with reference to Fig. 8 except that it may comprise more or fewer layers than illustrated in Fig. 8. Indeed, as many layers as desired for the required globule size can be produced by repeating the operations illustrated in Figs. 2 to 8.

Fig. 9 illustrates application of the flexible lubricant applicator brush 26 to a workpiece surface 38, which application is of a resilient, forcible and relatively movable application, so that the workpiece surface 38, which is harder than any portion of each globule 22 and in particular is harder than the particles 36, will cause the workpiece surface 38 to abrade away portions of the globules 22, comprising parts of the plastic resinoid matrix material 34 and multiple dry lubricant particles 36, or portions thereof, which will not only be abraded away from each globule 22 but will in fact become smeared and applied in any adhering manner across the workpiece surface 38 so as effectively to form a lubricating coating 40 (Fig. 10) thereon.

Fig. 10 is an enlarged microprofile cross-section of the workpiece surface 38 and shows that when the surface is of an idealized "plateaued type", it comprises multiple microprojections 42 spaced apart by crevices or valleys 44, with the tip ends of the microprojections 42 having been previously abraded away to provide them with flat tops 46. This view shows that the abraded-away combination of plastic matrix material 34 and dry lubricant particles 36 has been in fact smeared into the crevices 44 so as either to partially fill, completely fill, or even overfill the valleys 44. The filling material comprises the dry lubricant coating 40, which has been applied to the surface 38 and is adhered thereto so that the surface 38 is fully lubricated and ready to provide full lubrication upon its first frictional contact with any other surface or object.

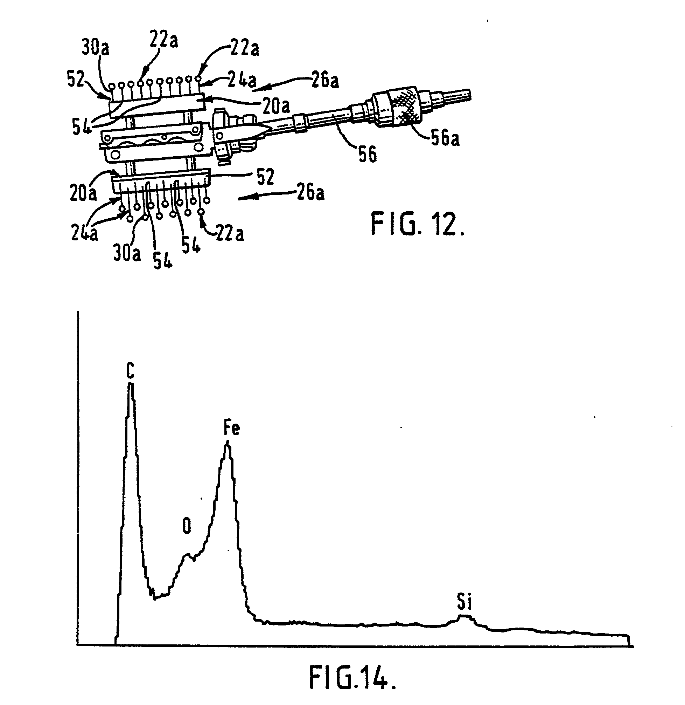

Fig. 11 is similar to Fig. 10 but merely shows a fragmentary microprofile workpiece surface section 38 which has not been plateaued in the manner of Fig. 10 but is of the so-called "peaky" type so that each microprojection 42 does not have its top abraded away to form the flat tops 46 of Fig. 10. This view shows the intervening crevices 44 filled with the smeared-on dry lubricant coating 40 in a manner similar to Fig. 11.

Each globule 22 must have means to allow it to be compliantly forced against and relatively moved with respect to the workpiece surface 38 and, in the brush 26 embodiment of the invention, the base member 20 may be employed for this purpose by manually grasping and forcibly applying and moving it. Thus the base member 20 comprises one non-limiting form of force-applying coupling means cooperable for driven engagement which may be accomplished by any of various forms of externally applicable movement-causing means such as the operators hand or a drill-motor chuck.

For example, an electric drill motor 48 and a chuck 50 may be used as shown in Fig. 9.

Fig. 12 shows another embodiment, exemplary of another of many forms which the force-applying coupling means may take. In this embodiment, parts corresponding to those shown in the first embodiment are indicated by like reference numerals followed by the letter "a". This embodiment has longitudinal base members 20a, with such base member having a mounting surface 52 which carries compliant mounting bristles 24a in generally similarly and adjacent outwardly directed relationship, rather than in the cylindrical array shown in Fig. 1. Thus each modified dry-lubricant-applying brush means 26a is substantially a one-sided brush and in the form illustrated, the rear ends 54 of the nylon bristles 24a are caried by the surface 52 of the corresponding base member 20a by being effectively embedded therein.

This may be accomplished in any of several different ways, either before or after the forming of the base member 20a such as by being moulded in place or by being affixed to the base, as by being cemented or otherwise attached thereto, for example in mounting holes in the corresponding surface 52 of the base member 20a. The several brush means 26a are carried by a shaft 56 and are manually expandable outwardly therefrom to the position shown, by movement of a knurled wheel 56a.

In any event, the bristle ends 30a carry dry lubricant globules 22a in a manner similar to that previously described. However, in this embodiment, the previously-mentioned coupling means, which comprised the extended end 20 of the base member in the first embodiment, now takes the form of the shaft 56 which comprises a handle suitable for manual engagement or for engagement by a power tool for compliantly and forcibly applying the globules 22a to a harder workpiece surface. For example, the shaft 56 may be manually grasped, or it may be clamped in a reciprocating power tool and then applied to the workpiece surface so that powered reciprocating movement can be employed for applying dry lubricant across the workpiece surface.

It should be noted that the dry lubricant particles are disclosed as graphite particles which are particularly suitable for dry lubrication of a workpiece surface, as is seen from Figs. 10 and 11. However, the invention is not thus limited, and the particles 36 may comprise particles or beads of teflon type of polytetrafluoroethylene, or any other material having lubricating properties and softer than a workpiece surface to be lubricated.

It should also be noted that while each lubricating globule of the first embodiment is shown as being of multi-layer cured construction and while this constitutes the preferred form of the invention, the invention is also intended to include other equivalent constructional arrangements in which binder or matrix material holds a dry lubricant material and mounts it in a compliant manner and in which the binder material and the dry lubricant material are both softer than the surface of a workpiece which is to be dry lubricated. This concept, in some forms, may be achieved without layering and in some cases even without the brush-like construction involving multiple bristles, provided merely that equivalently compliant mounting of the soft binder-held soft dry lubricant particles is achieved in the composite flexible lubricant applicator, and all such are intended to be included herein.

This also applies to the use of nylon for the bristle material and epoxy resin for the matrix material, which may be replaced by functionally equivalent materials in the two embodiments illustrated, or in other embodiments.

Also included within the scope of the invention is another embodiment in which the bristles and the lubricating globules are replaced by elongate bricks or blocks, functionally equivalent thereto and an expanding tool similar to that of Fig. 12, which bricks or blocks are of graphite, Teflon, or other solid dry lubricant material softer than a workpiece and flexibly mounted by the base structure.

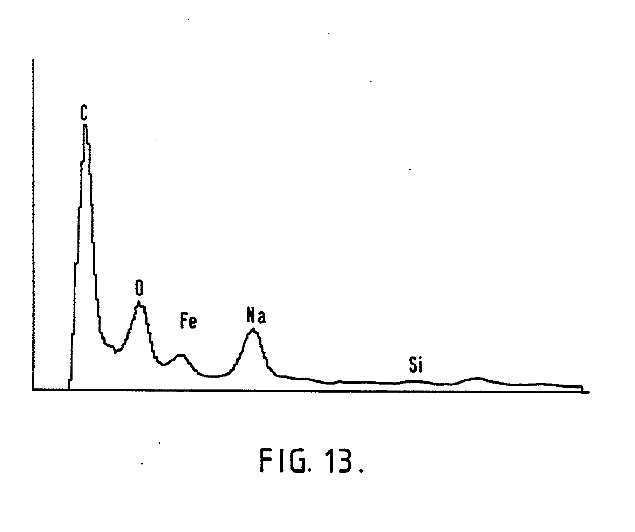

Fig. 13 is a graph made by electron-microscope-scanning analysis of a sample workpiece surface to a depth of one micron, showing particularly, the carbon and iron contents of the surface for the purpose of bringing out the dry lubricating characteristics brought about by the flexible independent suspension, low-velocity, low-contact pressure of the present flexible applicator. Fig. 13 and Fig. 14 are of similar type but show different relative carbon and iron contents based on different initial conditions of the treated workpiece surfaces. In other words, these two Figs. illustrate that under various initial surface conditions of a workpiece surface to be lubricated by the applicator of the present invention, the result is very effective as is shown by the relatively high carbon content seen in both Figs. 13 and 14. This high carbon content is the dry lubricating graphite particles which have been effectively smeared onto the treated surface of the workpiece by the independently suspended and effectively floating flexible mounting and operation of the applicator of the invention.

Fig. 13 correspond to the type of surface seen in Fig. 10, that is, either a workpiece surface which is initially "peaky" but has been honed down somewhat so that the multiple initial peaks thereof become small plateaus. In other words, it is a relatively fully-plateaued and relatively "non-peaky" finish.

Fig. 14 is similar to Fig. 13 but corresponds to Fig. 11 and shows that even with the more "peaky" workpiece surface of Fig. 11, the dry lubrication thereof produces a high carbon surface content to the 1 micron depth measure, and the only real difference is that Fig. 14 shows a higher relative percentage of iron present in the finished dry lubricated surface, as compared with Fig. 13. This is because the iron-containing peaks of a so-called "peaky" finish or partially or slightly plateaued finish are present and constitute a higher relative percentage than would otherwise be the case in a more plateaued finish of the Fig. 10 type. In Figs. 13 and 14 the elements carbon and iron and some other elements found to be present, are indicated by the usual chemical symbols.

Experimental analysis work, including testing by Scanning Electron Microscopic Labs has shown that a cylinder wall treated by the applicator of the invention had a coverage of over 90% carbon charted on the workpiece surface to a depth of one micron.

## Claims

1. A flexible lubricant applicator for forcibly applying a required quantity of a lubricant material to a workpiece surface which is harder than the lubricant material comprises a base member (20) having means for coupling it to driving means for moving said base member relative to a workpiece surface to be lubricated, lubricating means comprising a plurality of outwardly extending flexible lubricant mounting members (24) secured at their inner ends to said base member (20) and each provided at its outer end with a pre-formed lubricant body (22) for abradable engagement with the surface of a workpiece to be lubricated, said lubricant bodies being physically softer than the workpiece whereby forced abrasion of said lubricant bodies by irregularities in the workpiece surface serves to transfer lubricant material from said bodies (22) to said surface.

2. An applicator according to claim 1, wherein the lubricant mounting members (24) constitute compliant mounting shafts having their inner edges affixed to a central portion of the base member (20) and their outer ends provided with said lubricant bodies in the form of globules (22).

3. An applicator according to claim 1 or 2, wherein said lubricant bodies (22) extend helically around said base member (20) in spaced relation thereto to form a flexible brush.

4. An applicator according to any preceding claim, wherein at least some of the lubricant bodies include quantities of solid lubricating material carried by, and/or cured-in-place in a body of matrix material.

5. An applicator according to claim 4, wherein each lubricant body which includes solid lubricating material has a plurality of successively cured-in-place layers (34) of matrix material forming a composite cured-in-place lubricant globule.

6. An applicator according to claim 4 or 5, wherein at least some of the lubricant mounting members (24) comprise flexible nylon bristles.

7. An applicator according to claim 4, wherein each lubricant body (22) which includes solid lubricating material has such material in particulate form to comprise lubricating particles (36) cured-in-place in and on the surface of a resinoid body of matrix material (34), and at least some of the mounting members (24) comprising flexible nylon bristles, the particles of solid lubricating material being graphite particles (36).

8. An applicator according to claim 4, wherein each lubricating body (22) which includes solid lubricating material has such material in particulate form to comprise lubricating particles (36) cured-in-place in and on the surface of a resinoid body of matrix material (34), each comprising a plurality of successive cured-in-place matrix material layers (34) forming a composite cured-in-place lubricating globule of a size suitable for an intended lubricating usage, and at least some of the mounting members (24) comprising flexible nylon bristles, the particles of solid lubricating material being particles of Teflon polytetrafluoroethylene material.

9. An applicator according to any one of claims 4 to 8, wherein the matrix material (34) is an epoxy resin.

## Patentansprüche

1. Ein flexiber Schmiermittelapplikator zum zwangsläufigen Aufbringen einer erforderlichen Menge eines Schmiermittels auf eine Werkstücksoberfläche, die härter als das Schmiermittel ist, mit einem Trägerelement (20), welches mit Mitteln zu seinem Verbinden mit einer Antriebseinrichtung zum Bewegen des Trägerelements relativ zu einer zu schmierenden Werkstückoberfläche versehen ist, und einer Schmiervorrichtung mit einer Anzahl von sich nach aussen erstreckenden, flexiblen Schmiermittel-Befestigungs-Elementen (24), die an ihren inneren Enden an dem Trägerelement (20) sicher befestigt sind und von denen ein jedes an seinem äusseren Ende mit einem vorgeformten Schmiermittel-Körper (22) für ein schleifendes Ineingriffgelangen mit der Oberfläche eines zu schmierenden Werkstückes versehen ist, wobei diese Schmiermittel-Körper körperlich weicher als das Werkstück sind, wodurch ein durch Unregelmässigkeiten an der Werkstücksoberfläche zwangsläufig hervorgerufenes Abschleifen der Schmiermittel-Körper zum Übertragen von Schmiermittel von den Körpern (22) auf die Werkstücksoberfläche dient.

2. Applikator nach Anspruch 1, beim welchem die Schmiermittel-Befestigungs-Elemente (24) nachgiebige Befestigungs-Stiele oder -Schäfte bilden, deren inneren Enden mit einem mittleren Abschnitt des Trägerelements (20) befestigt und deren äusseren Enden mit den Schmiermittel-Körpern in der Form von Kügelchen (22) versehen sind.

3. Applikator nach Anspruch 1 oder 2, bei dem die Schmiermittel-Körper (22) schraubenförmig gewunden um das Trägerelement (20) herum und in einer beabstandeten Beziehung hierzu verlaufen, um eine flexible Bürste zu bilden.

4. Applikator nach einem der vorhergehenden Ansprüche, bei dem zumindest einige der Schmiermittel-Körper Mengen eines festen Schmiermittels enthalten, welches durch einen und/oder in einem Körper aus Matrix-Material getragen und/oder an Ort und Stelle ausgehärtet wird.

5. Applikator nach Anspruch 4, bei dem ein jeder Schmiermittel-Körper, der festes Schmiermittel enthält, eine Anzahl von aufeinanderfolgend an Ort und Stelle ausgehärteten, aus einem Matrix-Material bestehenden Schichten (34) aufweist, welche ein zusammengesetztes, an Ort und Stelle ausgehärtetes Schmiermittel-Kügelchen bilden.

6. Applikator nach Anspruch 4 oder 5, bei dem zumindest einige der Schmiermittel-Befestigungs-Elemente (24) flexible Nylon-Borsten aufweisen.

7. Applikator nach Anspruch 4, bei dem ein jeder Schmiermittel-Körper (22), welcher festes Schmiermittel enthält, ein solches Mittel in Form von Partikeln aufweist, um somit Schmiermittel-Partikel (36) zu beinhalten, die in einem und an der Oberfläche eines Kunstharz-Körper(s) aus Matrix-Material (34) an Ort und Stelle ausgehärtet sind, und bei dem zumindest einige der Befestigungs-Elemente (24) flexible Nylon-Borsten aufweisen, während die Partikel des festen Schmiermittels Graphit-Partikel (36) sind.

8. Applikator nach Anspruch 4, bei dem ein jeder Schmiermittel-Körper (22), der festes Schmiermittel enthält, ein solches Mittel in Form von Partikeln aufweist, um somit Schmiermittel-Partikel (36) zu beinhalten, die in einem und an der Oberfläche eines Kunstharz-Körper(s) aus Matrix-Material (34) an Ort und Stelle ausgehärtet sind, bei dem ein jeder Schmiermittel-Körper (22) eine Anzahl von aufeinanderfolgenden, an Ort und Stelle ausgehärteten Matrix-Material-Schichten (34) aufweist, welche ein zusammengesetztes, an Ort und Stelle ausgehärtetes Schmiermittel-Kügelchen von einer für die beabsichtigte Schmieranwendung geeigneten Grösse bilden, und bei dem ferner zumindest einige der Befestigungs-Elemente (24) flexible Nylon-Borsten aufweisen, wobei schliesslich die Pratikel des festen Schmiermittels Partikel aus Teflon, d.h. Polytetrafluorethylen-Material sind.

9. Applikator nach einem der Ansprüche 4–8, bei dem das Matrix-Material (34) ein Epoxy-Harz ist.

## Revendications

1. Applicateur flexible de lubrifiant pour l'application forcée d'une quantité requise d'un produit lubrifiant sur la surface d'une pièce à usiner ou brute plus dure que le produit lubrifiant, applicateur caractérisé en ce qu'il comprend une embase (20) présentant des moyens d'accouplement à des moyens d'entraînement pour déplacer cette embrase par rapport à la surface de la pièce brute à lubrifier, les moyens de lubrification comprenant plusieurs éléments rapportés de lubrification (24), flexibles et s'étendant vers l'extérieur, éléments solidarisés à l'embase (20) au niveau de leurs extrémités intérieures, chacun étant pourvu à son extrémité extérieure d'un corps lubrifiant préformé (22) pour un contact d'usure par frottement avec la surface d'une pièce brute à lubrifier, lesdits corps lubrifiants étant physiquement plus doux que la pièce brute de façon à ce que l'abrasion forcée desdits corps lubrifiants par les irrégularités de surface de la pièce brute permette le transfert du produit lubrifiant des corps (22) vers ladite surface.

2. Applicateur selon la revendication 1, caractérisé en ce que les éléments rapportés de lubrification (24) constituent des arbres flexibles dont les bords intérieurs sont scellés à une partie centrale de l'embase (20) et dont les bords extérieurs sont pourvus des corps lubrifiants sous forme de globules (22).

3. Applicateur selon la revendication 1 ou 2 caractérisé en ce que les corps lubrifiants (22) s'étendent de façon hélicoïdale autour de l'embase (20) espacés de celle-ci de façon à former une brosse flexible.

4. Applicateur selon l'une quelconque des revendications précédentes caractérisé en ce qu'au moins quelques uns des corps lubrifiants renferment des quantités d'un produit lubrifiant solide porté par et/ou solidifié ou polymérisé dans un corps d'un matériau en mosaïque.

5. Applicateur selon la revendication 4 caractérisé en ce que chacun des corps lubrifiants contenant le produit lubrifiant solide présente plusieurs couches successives (34) durcies d'un matériau en mosaïque formant un globule lubrifiant composite.

6. Applicateur selon la revendication 4 ou 5 caractérisé en ce qu'au moins quelques uns des éléments rapportés de lubrification (24) comprennent des poils de brosses flexibles en nylon.

7. Applicateur selon la revendication 4 caractérisé en ce que chaque corps lubrifiant (22) comprenant le produit lubrifiant solide le renferme sous une forme particulière telle qu'il présente des particules lubrifiantes (36) solidifiées ou polymérisées dans la masse, ou à la surface d'un matériau en mosaïque à corps en résine, et en ce qu'au moins quelques uns des éléments rapportés (24) présentent des poils de brosse flexibles en nylon, les particules du produit lubrifiant solide étant des particules (36) de graphite.

8. Applicateur selon la revendication 4 caractérisé en ce que chaque corps lubrifiant (22) comprenant le produit lubrifiant solide le renferme sous forme particulière telle qu'il présente des particules lubrifiantes (36) solidifiées ou polymérisées dans la masse ou à la surface d'un matériau en mosaïque à corps en résine (34) et en ce que chacun d'entre eux présente plusieurs couches d'un matériau en mosaïque à corps en résine (34) formant un globule lubrifiant composite solidifié ou polymérisé dans la masse d'une taille adaptée à l'utilisation de lubrification prévue et en ce qu'au moins quelques uns des éléments (24) rapportés comprennent des poils de brosse flexibles en nylon, les particules du produit lubrifiant solide étant des particules de polytétrafluoréthylène (TEFLON).

9. Applicateur selon l'une quelconque des revendications de 4 à 8 caractérisé en ce que le matériau en mosaïque est une résine époxy.

FIG. 1.

FIG. 1A.

FIG. 2.

FIG. 3.

FIG. 4.

FIG. 5.

FIG. 6.

FIG. 7.

FIG. 8.

FIG. 9.

FIG.10.

FIG.11.

FIG. 12.

FIG.14.

FIG. 13.